# EUROPÄISCHE PATENTSCHRIFT

(11) **EP 0 390 748 B1**
(45) Veröffentlichungstag und Bekanntmachung des Hinweises auf die Patenterteilung: **03.05.1995**
(21) Anmeldenummer: 90810259.3
(22) Anmeldetag: 30.03.1990
(51) Int. Cl.: F16L 47/02, B29C 65/34

(54) **Schweissmuffe**
Welding socket
Manchon de soudage

(30) Priorität: 31.03.1989 CH 1180/89
(43) Veröffentlichungstag der Anmeldung: 03.10.1990
(73) Patentinhaber: Geberit AG, CH-8645 Jona (CH)
(72) Erfinder: Etter, Bruno, CH-8865 Bilten (CH); Gübeli, Albert, CH-8645 Jona (CH)
(74) Vertreter: Groner, Manfred

(56) Entgegenhaltungen:
- EP-A- 0 233 608
- EP-A- 0 306 554
- EP-A- 0 337 037
- DE-A- 3 808 228
- DE-U- 8 801 976
- FR-A- 1 162 591
- FR-A- 1 233 305
- FR-A- 2 516 439
- GB-A- 794 833
- GB-A- 2 037 923
- US-A- 3 061 503
- US-A- 4 718 698

## Beschreibung

Die Erfindung betrifft eine Schweissmuffe zum Verbinden von Rohren. Eine Schweissmuffe dieser Art ist beispielsweise aus der EP-B-0 093 821 sowie aus der EP-A-337 037, die einen Stand der Technik gemäss Art. 54(3) EPÜ bildet, bekannt geworden. Die EP-A-337 037 zeigt die Verwendung einer solchen Schweissmuffe zum Verbinden von mehrschichtigen Rohren. Die Stirnseite der Rohre sind in der Schweissmuffe gegen Korrosion jedoch nicht hinreichend geschützt.

Der Erfindung liegt die Aufgabe zugrunde, eine Schweissmuffe dieser Art zu schaffen, die sich besonders zum Verbinden von mehrschichtigen Rohren und insbesondere Verbundrohren eignet. Die Aufgabe ist durch die Erfindung gemäss Anspruch 1 gelöst.

Bei Verwendung der erfindungsgemässen Schweissmuffe werden nicht nur wie üblich die Rohrenden an ihrer Mantelfläche mit der Schweissmuffe verschweisst, sondern zudem die Stirnflächen dieser Rohre mit angeflossenem Muffenmaterial so überdeckt, dass die Stirnflächen wirksam abgedichtet sind und beispielsweise durch eingedrungenes Wasser chemisch nicht angegriffen werden können. Damit wird eine an den Stirnflächen beginnende Zerstörung insbesondere eines mehrschichtigen Rohres und damit eine mögliche Undichtigkeit der Muffenverbindung wirksam verhindert. Die erfindungsgemässe Schweissmuffe ermöglicht somit, auch mehrschichtige Rohre mit chemisch wenig resistenten Materialien bzw. Schichten zu verschweissen und eine Rohrleitung mit solchen Rohren beispielsweise auch als Abwasserleitungen zu verwenden. Diese mehrschichtigen Rohre müssen selbstverständlich wenigstens eine äussere oder innere Schicht aus thermoplastischem Material aufweisen.

Eine besonders günstige Verschweissung wird dann erreicht, wenn die Ausnehmung eine zylindrische Vertiefung in einer Stirnfläche der Schweissmuffe ist. In Kombination mit diesem Merkmal ist es vorteilhaft, wenn wenigstens ein Durchgang vorhanden ist, durch den die Luft aus dem genannten Freiraum während des Schweissvorganges entweichen kann. Der Durchgang kann eine radiale Bohrung oder ein sich in Längsrichtung der Schweissmuffe erstreckender Gang sein.

Ebenfalls in Kombination mit der genannten zylindrischen Vertiefung ist es vorteilhaft, wenn in diese ein Dichtring eingesetzt ist, der das eingesetzte Rohr auf seiner Innenseite abdichtet. Damit wird durch eine zusätzliche Massnahme verhindert, dass ein aggressives Medium, beispielsweise Abwasser zur Stirnfläche gelangen kann. Der Dichtring verbessert zudem die Zentrierung der Muffe auf dem Rohr.

Zwei Ausführungsbeispiele der Erfindung werden nachfolgend anhand der Zeichnungen näher erläutert. Es zeigen:
- Fig. 1a: ein Längsschnitt durch einen Teil einer erfindungsgemässen Schweissmuffe mit eingeschobenem Rohrende,
- Fig. 1b: entsprechend Fig. 1a jedoch nach dem Schweissvorgang,
- Fig. 2a: einen Längsschnitt durch einen Teil einer Schweissmuffe nach einer Variante mit eingeschobenem Rohrende, und
- Fig. 2b: entsprechend Fig. 2a, jedoch nach dem Schweissvorgang.

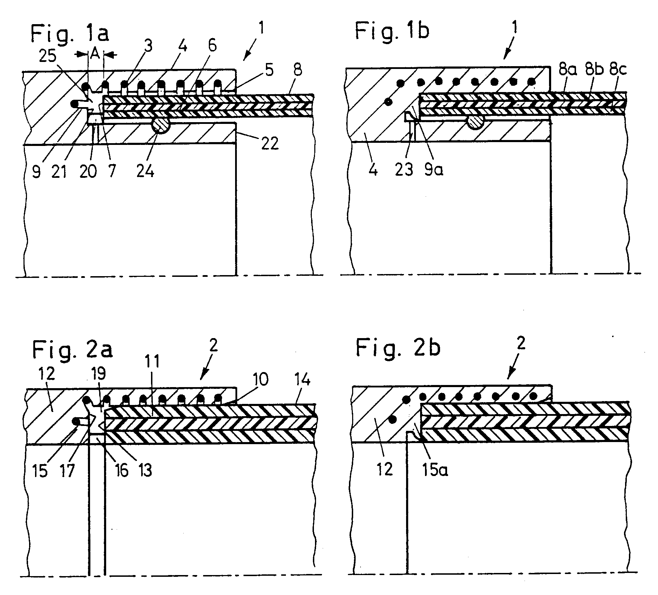

Die in den Fig. 1a und 1b gezeigte Schweissmuffe 1 besitzt einen zylindrischen Körper 4 aus einem thermoplastischen Kunststoff. Ein in bekannter Weise eingelegter Widerstandsheizdraht 3 wird zum Verschweissen an hier nicht gezeigten Anschlussstellen der Schweissmuffe 1 an eine elektrische Stromquelle angeschlossen. In wenigstens eine der Stirnflächen 22 ist eine zylindrische Ausnehmung 5 eingearbeitet, in die ein Rohrende eines Rohres 8 eingeschoben wird. Durch einen ebenfalls in die Ausnehmung 5 eingesetzten Dichtungsring 24 aus gummielastischem Material wird das Rohr 8 in der Ausnehmung zentriert und auf seiner Innenseite abgedichtet. Zwischen einer Stirnfläche 7 des Rohres 8 und einer gegenüberliegenden Fläche 21 der Ausnehmung 5 besteht ein bestimmter Abstand A, der durch einen als Distanzhalter wirkenden Ansatz 20 gehalten wird. Der Abstand A liegt etwa im Bereich von einem oder wenigen Millimetern. Der zwischen den Flächen 21 und 7 vorhandene Ringraum 25 ist über einen Durchgang 23 mit dem Muffeninneren verbunden.

Wird der Widerstandsheizdraht 3 an die elektrische Stromquelle angeschlossen, so wird die in der Muffe 1 befindliche äussere Mantelfläche des Rohrendes in üblicherweise mit der Schweissmuffe verschweisst. Im Unterschied zu den üblichen Schweissmuffen wird bei der erfindungsgemässen Schweissmuffe 1 auch der Bereich vor der Stirnseite 7 erhitzt. Der entsprechende Bereich 9 des Muffenkörpers 4 füllt beim Schmelzvorgang den Ringraum 25 wenigstens teilweise aus, wobei gleichzeitig durch den Durchgang 23 die verdrängte Luft entweichen kann. Der ursprünglich freie Ringraum 25 ist wie in Fig. 1b gezeigt nach der Verschweissung durch Material 9a aus der Schweissmuffe wenigstens teilweise ausgefüllt. Durch dieses Material 9a wird die Stirnfläche 7 des Rohres 8 vollständig deckt. Damit kann ein Eindringen aggressiver Medien in die Grenzflächen der Schichten 8a, 8b und 8c wirksam verhindert werden. Von diesen genannten Schichten besteht wenigstens die Schicht 8a aus einem thermoplastischen Kunststoff. Die Schichten 8b und 8c können aus einem Werkstoff bestehen, der beim Schweissvorgang mit der Muffe 1 nicht verschweisst wird. Die Schweissmuffe 1 weist an dem hier nicht gezeigten gegenüberliegenden Ende eine zweite, Ausnehmung 5 entsprechende Ausnehmung auf. Es sind hier jedoch Ausführungen vorgesehen, bei denen die Schweissmuffe am anderen Ende ein Gewinde oder andere Anschlussmittel aufweist. Selbstverständlich kann diese Muffe 1 auch für übliche Rohre aus thermoplastischem Material verwendet werden.

Die Schweissmuffe nach den Fig. 2a und 2b besitzt ebenfalls eine Ausnehmung 10, die hier jedoch radial nach innen offen ist. Das in die Ausnehmung 10 eingeschobene Rohr 14, das hier ebenfalls ein mehrschichtiges Rohr ist, stösst mit seiner Stirnseite 13 an einen Ansatz 16, so dass auch hier ein freier Ringraum 19 zwischen der Stirnfläche 13 und einer Fläche 17 der Ausnehmung 10 vorhanden ist. Beim Verschweissen findet auch hier ein Materialfluss statt, bei dem ein Bereich 15 des Muffenkörpers 12 in den Ringraum 19 fliesst. Wie die Fig. 2b zeigt, wird bei dieser Ausführung die Stirnfläche 13 durch den Materialbereich 15a abgedeckt. Damit ein hinreichender Materialfluss gewährleistet ist, ist ein Widerstandsheizdraht 11 bis in den Bereich des Muffenmaterials 15 gelegt. Bei dieser zweiten Ausführung ist besonders vorteilhaft, dass durch die Muffe 2 im Innern der Rohrleitung keine Verengung geschaffen wird.

## Patentansprüche

1. Schweissmuffe zum Verbinden von Rohren, mit einem eingelegten Stromleiter, der mindestens teilweise als Widerstandsheizdraht (3) ausgebildet ist sowie mit wenigstens einer Ausnehmung (5,10) in einer Stirnfläche (22) der Schweissmuffe zur Aufnahme eines Rohrendes (6,11), wobei die Ausnehmung (5,10) und der Widerstandsheizdraht (3) so ausgebildet sind, dass der Körper (4,12) der Schweissmuffe (1,2) beim Verschweissen auch in einem gegenüber der Stirnfläche (7,13) des einzusetzenden Rohres (8,14) angeordneten Bereich (9,15) schmilzt, derart, dass die Stirnfläche des eingesetzten Rohres (8,14) nach dem Verschweissen mit Muffenmaterial (9a,15a) abgedeckt ist, wobei ein Distanzhalter (20,16) vorgesehen ist, der die Stirnfläche (7,13) des in die Ausnehmung (5,10) eingeschobenen Rohres (8,14) in einem bestimmten Abstand (A) zu einer gegenüberliegenden Fläche (21,17) der Ausnehmung (5,10) hält und wobei der Widerstandsheizdraht (3) auch in dem gegenüber der Stirnfläche (7,13) des eingesetzten Rohres (8,14) angeordneten Bereich (9,15) verläuft.

2. Schweissmuffe nach Anspruch 1, dadurch gekennzeichnet, dass die Ausnehmung (5) eine zylindrische, gegenüber der Muffeninnenseite geschlossene Vertiefung in einer Stirnfläche (22) der Schweissmuffe (1) ist (Fig. 1a und 1b).

3. Schweissmuffe nach Anspruch 1 oder 2, gekennzeichnet durch wenigstens einen Durchgang (23), durch den Luft in der Ausnehmung (5) während des Schweissvorgangs entweichen kann.

4. Schweissmuffe nach einem der Ansprüche 2 bis 3, dadurch gekennzeichnet, dass in die Ausnehmung (5) ein Dichtungsring (24) eingesetzt ist, der das eingesetzte Rohr (8) auf seiner Innenseite abdichtet.

## Claims

1. Welding socket for connecting pipes, having an inserted current conductor, which is designed at least partially as a resistance heating wire (3), and having at least one recess (5, 10) in an end face (22) of the welding socket for receiving a pipe end (6, 11), the recess (5, 10) and the resistance heating wire (3) being designed in such a way that, during welding, the body (4, 12) of the welding socket (1, 2) also melts, in a region (9, 15) arranged opposite the end face (7, 13) of the pipe (8, 14) to be fitted, in such a way that, after welding, the end face of the inserted pipe (8, 14) is covered by socket material (9a, 15a), a spacer (20, 16) being provided, which keeps the end face (7, 13) of the pipe (8, 14) which has been pushed into the recess (5, 10) at a certain distance (A) from an opposite face (21, 17) of the recess (5, 10), and the resistance heating wire (3) also running in the region (9, 15) arranged opposite the end face (7, 13) of the inserted pipe (8, 14).

2. Welding socket according to Claim 1, characterized in that the recess (5) is a cylindrical depression, closed with respect to the internal side of the socket, in an end face (22) of the welding socket (1) (Figs 1a and 1b).

3. Welding socket according to Claim 1 or 2, characterized by at least one passage (23), through which air in the recess (5) can escape during the welding operation.

4. Welding socket according to one of Claims 2 to 3, characterized in that a sealing ring (24) which seals off the inserted pipe (8) on its internal side is inserted in the recess (5).

## Revendications

1. Manchon de soudage pour l'assemblage de tubes, comportant un conducteur de courant inséré, qui est configuré du moins en partie en tant que fil de chauffage par résistance (3), ainsi qu'au moins un évidement (5, 10) dans une surface frontale (22) du manchon de soudage pour recevoir une extrémité de tube (6, 11), l'évidement (5, 10) et le fil de chauffage par résistance (3) étant configurés de telle manière que le corps (4, 12) du manchon de soudage (1, 2), lors de l'opération de soudage, fonde également dans une zone (9, 15) située en face de la surface frontale (7, 13) du tube à emboîter (8, 14), de telle manière que la surface frontale du tube emboîté (8, 14) soit recouverte, après l'opération de soudage, par la matière du manchon (9a, 15a), une pièce d'écartement (20, 16) étant prévue pour maintenir la surface frontale (7, 13) du tube (8, 14) introduit dans l'évidement (5, 10) à une distance prédéterminée (A) par rapport à une surface opposée (21, 17) de l'évidement (5, 10), le fil de chauffage par résistance (3) s'étendant également dans la zone (9, 15) située en face de la surface frontale (7, 13) du tube emboîté (8, 14).

2. Manchon de soudage selon la revendication 1, caractérisé en ce que l'évidement (5) est un renfoncement cylindrique dans une surface frontale (22) du manchon de soudage (1) et fermé par rapport au côté intérieur du manchon (figure 1a et 1b).

3. Manchon de soudage selon la revendication 1 ou 2, caractérisé par au moins un passage (23) par lequel peut s'échapper l'air présent dans l'évidement (5) pendant l'opération de soudage.

4. Manchon de soudage selon l'une des revendications 2 à 3, caractérisé en ce qu'un anneau d'étanchéité (24) est placé dans l'évidement (5) pour rendre étanche le tube emboîté (8), sur son côté intérieur.
